# EUROPÄISCHE PATENTSCHRIFT

(11) **EP 1 216 811 B1**
(45) Veröffentlichungstag und Bekanntmachung des Hinweises auf die Patenterteilung: **17.01.2007**
(21) Anmeldenummer: 01126684.8
(22) Anmeldetag: 08.11.2001
(51) Int. Cl.: B29C 69/00, B29C 51/04, B29C 51/12, B29C 51/42, B29L 22/00

(54) **Verfahren und Vorrichtung zur Herstellung von Hohlkörpern**
Method and apparatus for manufacturing hollow articles
Procédé et dispositif pour la fabrication de corps-creux

(30) Priorität: 22.12.2000 DE 10064218
(43) Veröffentlichungstag der Anmeldung: 26.06.2002
(73) Patentinhaber: KIEFEL GmbH, 83395 Freilassing (DE)
(72) Erfinder: Feil, Jürgen, 83410 Leobendorf (DE); Staudinger, Andreas, 83395 Freilassing (DE)
(74) Vertreter: Zmyj, Erwin

(56) Entgegenhaltungen:
- WO-A-01/60592
- US-A- 3 779 687
- US-A- 3 854 860
- US-A- 5 658 523
- US-B1- 6 372 176

## Beschreibung

Die Erfindung bezieht sich auf ein Verfahren zur Herstellung von Hohlkörpern, bei dem zwei Kunststoffplatten beheizt, vorgeformt, fertig geformt und miteinander verbunden werden. Die Erfindung bezieht sich auch auf eine Vorrichtung zur Durchführung des Verfahrens.

Die Herstellung von Hohlkörpern in der angegebenen Art wird auch als *Twin-Sheet-Verfahren* bezeichnet. Ein derartiges Verfahren geht aus der US-PS 3,854,860 hervor. Dort sind ein oberes Formwerkzeug und ein oberes Vorformwerkzeug sowie ein unteres Formwerkzeug und ein unteres Vorformwerkzeug jeweils auf einer gemeinsamen Platte angeordnet, so dass diese Werkzeuge nur gleichzeitig zur Durchführung eines Formvorganges bewegbar sind. Dies fällt bei der Herstellung von Hohlkörpern symmetrischer Formgebung unter Verwendung gleicher Kunststoffplatten nicht nachteilig ins Gewicht, jedoch ist ein derartiges Verfahren bei unsymmetrischen Hohlkörpern und insbesondere unter Verwendung ungleicher Kunststoffplatten nachteilig, weil die ungleichen Kunststoffplatten eine ungleiche Formgebung und damit unterschiedliche Bewegungen der Formwerkzeuge erfordern. Weiterhin ist ein Verfahren der eingangs angegebenen Art aus der US 5,658,523 bekannt. Auch dort findet die Formung der Kunststoffplatten im gleichen Takt statt, wobei auch noch obendrein die Beheizung der Platten in einer einzigen Heizstation stattfindet, so dass auch hier im wesentlichen die Herstellung von Hohlkörpern auf solche mit identischen Plattenpaaren beschränkt bleibt.

Aus der US 3,779,687 ist eine Vorrichtung bekannt, bei der mittels zweier Drehkreuze jeweils eine Kunststoffplatte von einer Beschickstation über eine Heizstation zu einer Formstation gefördert werden, in der auch eine Vorformung stattfinden kann, jedoch sind die beiden Drehkreuze miteinander synchronisiert, so dass die Beheizung und Verformung taktweise erfolgt. Auch hier ist die Herstellung von Hohlkörpern auf solche mit identischen Plattenpaaren beschränkt.

Die Schwierigkeiten bei den bekannten Verfahren liegen darin, dass die Beheizung und die Vorformung nicht unabhängig für die jeweiligen Kunststoffplatten durchgeführt werden kann, so dass auf die unterschiedlichen Erfordernisse bei den jeweiligen Kunststoffplatten nicht eingegangen werden kann. Außerdem besteht keine Möglichkeit bei diesen Verfahren und Vorrichtungen Einsätze in die Hohlkörper vorzusehen, wie sie bei Kraftstofftanks für Kraftfahrzeuge erforderlich sein können.

Aufgabe der Erfindung ist es ein Verfahren und eine Vorrichtung anzugeben, mit deren Hilfe die Beheizung, Vorformung und Endformung jeder einzelnen Kunststoffplatte abgestimmt auf die individuellen Erfordernisse dieser Platte unabhängig und unbeeinflusst von der Behandlung der anderen Kunststoffplatte durchgeführt werden kann und wobei es auch möglich ist bei der Herstellung von Hohlkörpern auch Einsätze in diesen Hohlkörpern vorzusehen. Diese Aufgabe wird durch den Verfahrensanspruch 1 und den Vorrichtungsanspruch 11 gelöst

Die Aufgabe wird ausgehend von einem Verfahren der eingangs angegebenen Art erfindungsgemäß dadurch gelöst, dass die Beheizung der Kunststoffplatten nicht nur zeitlich unabhängig, sondern auch räumlich abgeschirmt von der jeweils anderen Kunststoffplatte erfolgt und dass die Vorformung und die Verformung jeder Kunststoffplatte in getrennten Formstationen unabhängig und unbeeinflusst von der jeweils anderen Kunststoffplatte erfolgt.

Hierdurch sind gegenseitige thermische Beeinflussungen, sei es durch Strahlungswirkung oder Konvektion, ausgeschlossen. Aufgrund dieser Gestaltung des Verfahrens ist es nicht nur möglich Hohlkörper in symmetrischer Form und aus gleichen Kunststoffplatten herzustellen, sondern es besteht die Möglichkeit unterschiedliche Heizzeiten und unterschiedliche Formvorgänge bezogen auf jedes der beiden den fertigen Hohlkörper bildenden Teile durchzuführen. Außerdem ist gewährleistet, dass gegenseitige Beeinflussungen, beispielsweise ausgehend von den Heizstationen ausgeschlossen sind. Schließlich wird hierdurch die Voraussetzung geschaffen, auch Einsätze in dem herzustellenden Hohlkörper vorzusehen.

Eine bevorzugte Weiterbildung der Erfindung besteht darin, dass die Zuführung der Kunststoffplatten zu getrennten Heizstationen im gegenläufigen Sinne erfolgt. Hierdurch ist mit Sicherheit eine gegenseitige Beeinflussung aufgrund des vorhandenen räumlichen Abstandes ausgeschlossen.

Sollten die Platzverhältnisse eine großzügige, räumliche Trennung mit im gegenläufigen Sinne erfolgenden Zuführung nicht zulassen, so kann die Zuführung der Kunststoffplatten zu getrennten Heizstationen gleichsinnig, jedoch thermisch abgeschirmt erfolgen.

Eine vorteilhafte weitere Ausgestaltung des vorliegenden Verfahrens besteht darin, dass für die Vorformung ein Vordehnstempel verwendet wird. Es kann aber auch zweckmäßig sein, dass für die Vorformung ein in dem Hohlkörper verbleibender Einsatz verwendet wird. Je nach herzustellendem Körper kann es auch vorteilhaft sein, wenn in Weiterbildung der Erfindung für die Vorformung ein Vordehnstempel und ein in dem Hohlkörper verbleibender Einsatz verwendet wird. Durch die Verwendung eines im Hohlkörper verbleibenden Einsatzes können beispielsweise bei Kraftstofftanks für Kraftfahrzeuge Trennwände eingesetzt werden, die eine allzu heftige Flüssigkeitsbewegung im Tank bedingt durch Fliehkräfte und Beschleunigungskräfte vermeiden. Dabei kann der Herstellungsvorgang so gesteuert sein, dass der Einsatz mit zumindest einem der beiden Teile des Hohlkörpers verschweißt oder geklemmt oder verklebt wird. Das Verschweißen erfolgt dabei aufgrund des Wärmeinhalts, zumindest des einen der den Hohlkörper bildenden Teile. Es ist aber auch möglich, dass der Einsatz zusätzlich erhitzt wird, um den Schweißvorgang zu begünstigen. Eine Klemmverbindung kann beispielsweise dadurch erfolgen, dass der Einsatz in einer im Hohlkörper geformten Nut geklemmt wird.

Eine Vorrichtung zur Durchführung des Verfahrens mit zwei Formstationen und zwei Heizstationen sowie zwei Transporteinrichtungen, die jeweils eine Kunststoffplatte zu einer Heizstation und darauffolgend zu einer Formstation transportieren, wobei jede Formstation ein Vorformwerkzeug und ein Formwerkzeug aufweist und wobei das Formwerkzeug der einen Formstation für den Verbindungsvorgang in Ausrichtung zum verbleibenden Formwerkzeug der anderen Formstation im Austausch zu deren Vorformwerkzeug verfahrbar ist, ist dadurch gekennzeichnet, dass die Formstationen unabhängig voneinander betreibbar nebeneinander angeordnet sind und die Transporteinrichtungen aus gegensinnigen oder aus gleichen Transportrichtungen zu den Formstationen transportieren und dass eine Transporteinrichtung zum Verfahren der einen verformten Kunststoffplatte aus der einen Formstation in die benachbarte Formstation vorgesehen ist.

Eine solche Vorrichtung ist geeignet die unabhängige und unbeeinflusste Behandlung der einzelnen Kunststoffplatten durchzuführen, was die Herstellung verschiedener Hohlkörpertypen ermöglicht. Bei dieser Ausführungsform ist ein verhältnismäßig großer Platzbedarf vorhanden, da die Transporteinrichtungen aus unterschiedlichen Richtungen zu den Formstationen transportieren, jedoch hat diese Ausgestaltung den Vorteil, dass gegenseitige Beeinflussungen mit Rücksicht auf die zu transportierenden Kunststoffplatten, beispielsweise ausgehend von den Heizstationen nicht eintreten können. Bei der zweiten Variante, bei der die Transporteinrichtungen aus gleichen Transportrichtungen transportieren, muss auf eine thermische Trennung zwischen den Heizstationen geachtet werden.

Eine Variante einer solchen Vorrichtung zur Durchführung des Verfahrens, die mit einem geringeren Platzbedarf auskommt, ist dadurch gekennzeichnet, dass die Formstationen unabhängig voneinander betreibbar nebeneinander angeordnet sind und die Transporteinrichtungen aus gleichen Transportrichtungen zu den Formstationen transportieren und dass eine Transporteinrichtung zum Verfahren der einen verformten Kunststoffplatte aus der einen Formstation in die benachbarte Formstation vorgesehen ist. Bei einer solchen Ausgestaltung kann es erforderlich sein, dass bei einer Nebeneinanderanordnung der Heizstationen auf dem Transportweg eine thermische Trennung zwischen den Heizstationen vorgesehen werden muss.

Wenn in weiterer Ausgestaltung der Erfindung die Transporteinrichtungen geradlinig verlaufende Transportsysteme umfassen, so ist hier die Möglichkeit des Einsatzes für sehr viele gängige und auf dem Markt erhältliche Transportsysteme eröffnet.

Eine äußerst platzsparende und konstruktiv dennoch einfache Lösung mit allen Vorteilen der räumlich getrennten Anordnung der Heizstationen ergibt sich bei einer weiteren Ausgestaltung der Erfindung dadurch, dass die Transporteinrichtungen Transportsysteme nach Art von Drehtischen umfassen. Dabei können die Drehrichtungen beider Transporteinrichtung gegensinnig oder gleichsinnig sein.

Wenn aus Platzgründen die Heizeinrichtungen bzw. Heizstationen sehr nahe zueinander und auch in bezug auf die Formstationen angeordnet werden müssen, so ist in weiterer Ausgestaltung der Erfindung vorgesehen, dass um die Heizstationen zumindest teilweise eine wärmeisolierende Abschirmung vorgesehen ist.

Um die unabhängige Arbeitsweise jeder Formstation zu gewährleisten, ist vorgesehen, dass das Vorformwerkzeug unabhängig vom zugeordneten Formwerkzeug quer zu der für das Vorformen vorgesehenen Verschieberichtung, d.h. Hubrichtung verschiebbar oder verschwenkbar ist.

Wenn das Vorformwerkzeug auswechselbar auf einem Tisch gehalten ist, so kann es nicht nur gegen andere Vorformwerkzeuge, die dem Fertigungsvorgang besser angepasst sind, ausgetauscht werden, sondern es kann auch in einfacher Weise ein Austausch gegen einen im Hohlkörper verbleibenden Einsatz vorgenommen werden. Neben dem Vorformwerkzeug kann auch ein im Hohlkörper verbleibender Einsatz lösbar gehalten sein.

Eine bevorzugte Ausgestaltung der Vorrichtung ergibt sich dadurch, dass eine erste Formstation ein oberes Vorformwerkzeug und ein unteres Formwerkzeug und eine zweite Formstation ein unteres Vorformwerkzeug und ein oberes Formwerkzeug aufweist, dass eine Schiebvorrichtung zum Verschieben des unteren Vorformwerkzeuges der zweiten Formstation aus dieser heraus und in diese hinein sowie eine Schiebevorrichtung zum Verschieben des unteren Formwerkzeuges aus der ersten Formstation in die zweite Formstation und zurück vorgesehen sind und dass die Schiebevorrichtungen gemeinsam antreibbar sind. In Abhängigkeit vom jeweiligen Anwendungsfall kann es vorteilhaft sein, dass die Schiebevorrichtungen getrennt antreibbar sind. Hierdurch ist eine einfache und platzsparende Verbindung zwischen beiden Formstationen geschaffen, um trotz der Verwendung von Vorformwerkzeugen eine einfache Ausgestaltung der Formstationen für die Herstellung von Hohlkörpern zu ermöglichen.

Wenn in weiterer Ausgestaltung der Erfindung der Hubantrieb für das Vorformwerkzeug der zweiten Formstation auch als Hubantrieb für das in die zweite Formstation eingeschobene Formwerkzeug der ersten Formstation dient und zur Ausübung der für den Verbindungsvorgang der beiden Formteile zur Herstellung des Hohlkörpers notwendigen Presskräfte ausgelegt ist, so wird hierdurch der konstruktive Aufwand bei der zweiten Formstation verringert.

Um die jeweiligen Formstationen von der Auslegung her an die jeweils auftretenden Kräfte anzupassen, ist vorgesehen, dass die zweite Formstation zur Aufnahme der beim Verbindungsvorgang auftretenden Presskräfte massiver als die erste Formstation ausgelegt ist.

Die Erfindung wird nachfolgend anhand von schematisch dargestellten Ausführungsformen von Vorrichtungen zur Herstellung von Hohlkörpern näher erläutert. In der Zeichnung zeigen:
- **Figur 1 bis 6:**: eine Vorrichtung zur Herstellung von Hohlkörpern in Seitenansicht und in verschiedenen Arbeitspositionen;
- **Figur 7:**: eine Ausführungsform einer schematisch dargestellten Vorrichtung in Draufsicht;
- **Figur 8:**: eine Draufsicht auf eine zweite Ausführungsform einer Vorrichtung;
- **Figur 9:**: einen unteren Teil eines Hohlkörpers mit VorFormwerkzeug und zusätzlichem Einsatz in vergrößerter Darstellung; und
- **Figur 10:**: den unteren Teil des Hohlkörpers mit verbleibendem Einsatz.

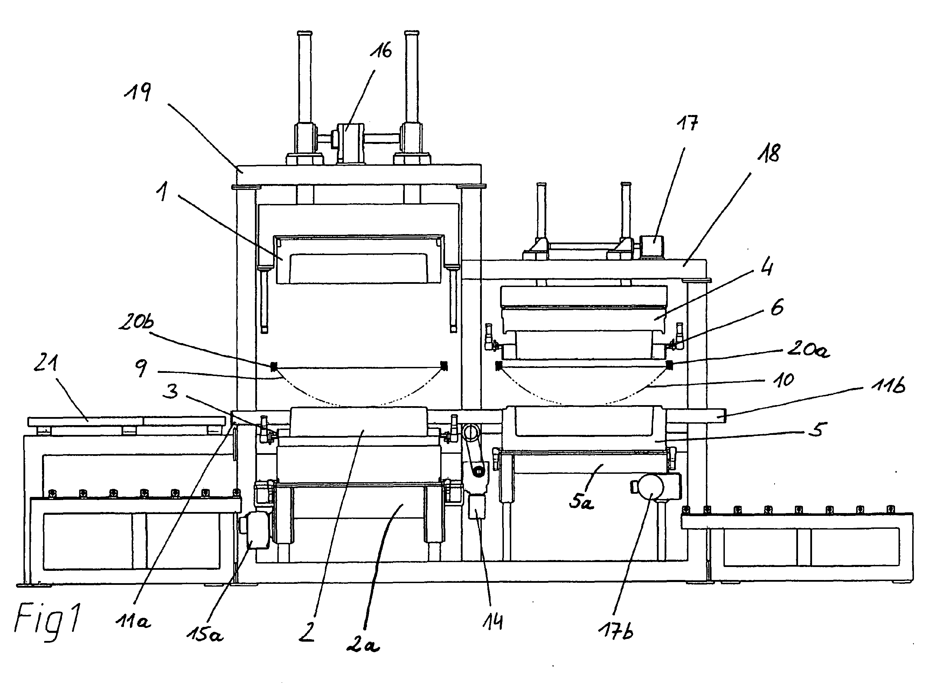

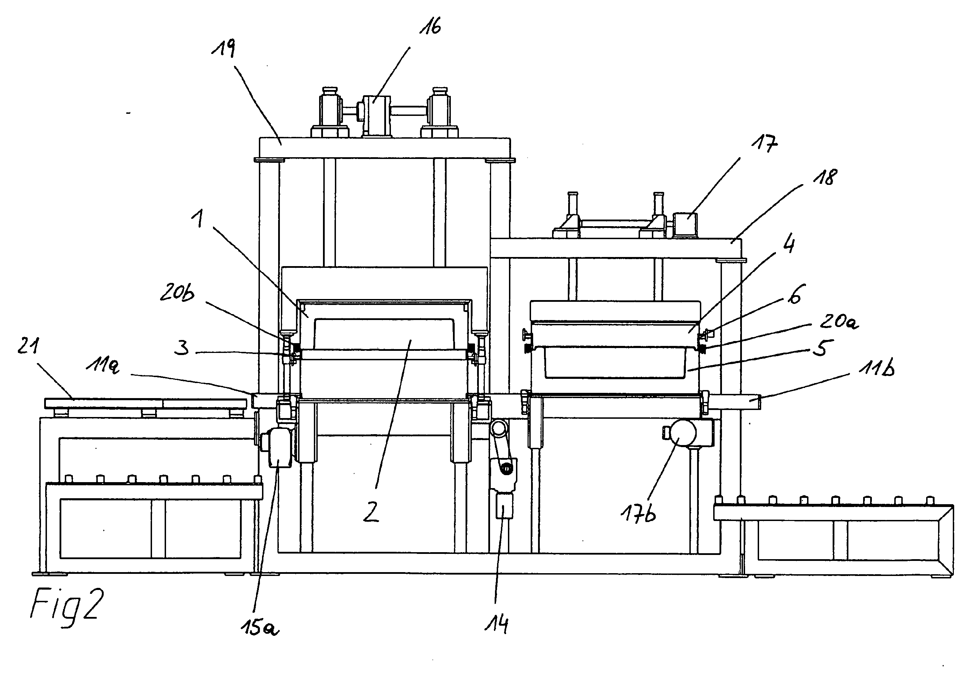

Wie aus den Figuren 1 bis 6 ersichtlich, sind zwei Formstationen 18 und 19 nebeneinander angeordnet. Die erste Formstation 18 umfasst ein unteres Formwerkzeug 5 sowie ein oberes Vorformwerkzeug 4, um eine mit strichpunktierten Linien angedeutete Kunststoffplatte 10 vorzudehnen und in dem Formwerkzeug 5 in bekannter Weise unter Anwendung eines Vakuums zu einem unteren Formteil 7b eines herzustellenden Hohlkörpers 8 fertig zu formen. Die Kunststoffplatte 10 wird hierbei von einer Transporteinrichtung 20a gehalten und in die Formstation 18 hineintransportiert. Während des Vorformvorganges und Fertigformvorganges wird die Kunststoffplatte 10 von einem Spannrahmen 6 gehalten. Das Vorformwerkzeug 4 wird für den Vorformvorgang mittels eines Antriebes 17 abgesenkt und nach Beendigung dieses Vorformvorganges wieder angehoben, wie dies aus den unterschiedlichen Höhenpositionen aus den Figuren 1 und 2 hervorgeht. Das untere Formwerkzeug 5 ist auf einem Tisch 5a angeordnet. Das Formwerkzeug 5 wird zusammen mit dem Tisch 5a mittels eines unteren Antriebes 17b gegen das abgesenkte Vorformwerkzeug 4 gefahren, um die Kunststoffplatte für den anschließenden Vakuumformvorgang übernehmen zu können.

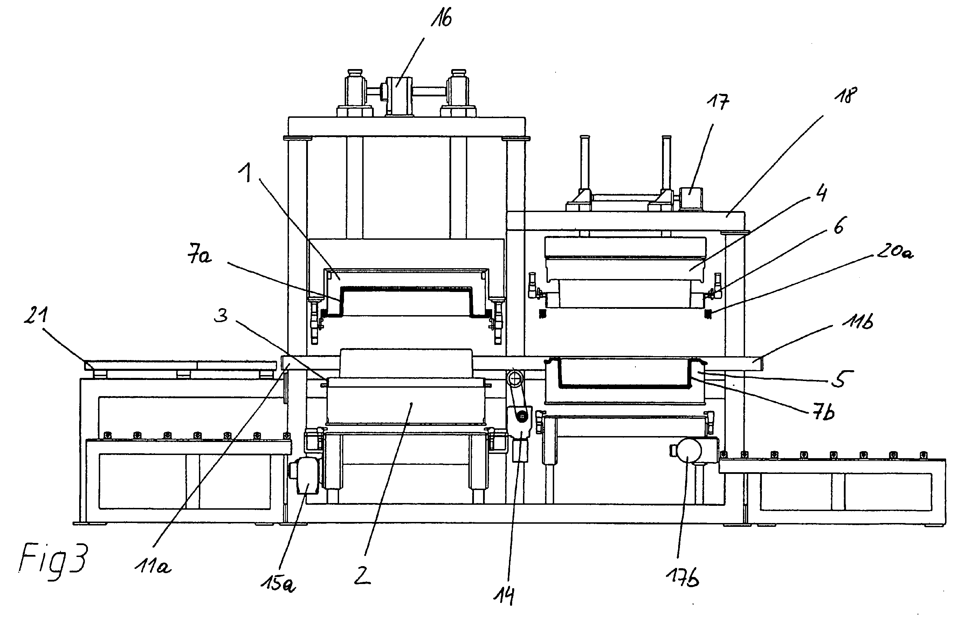

Eine mittels einer Transporteinrichtung 20b in eine neben der Formstation 18 angeordnete Formstation 19 hineingeförderte weitere Kunststoffplatte 9 wird von einem Spannrahmen 3 festgeklemmt, um in ähnlicher Weise wie in der Formstation 18 diese Kunststoffplatte mittels eines Vorformwerkzeuges 2 vorzuformen, wobei die Kunststoffplatte gegen ein oberes Formwerkzeug 1 vorgeformt wird, in welchem in üblicher Weise die Fertigformung mittels Vakuum erfolgt. Zu diesem Formvorgang werden das obere Formwerkzeug 1 mittels eines Antriebes 16 abgesenkt und ein Antrieb 15a dient zur Anhebung eines das Vorformwerkzeuges 2 tragenden Tisches 2a. Dieses Vorformwerkzeug 2 ist leicht auswechselbar auf dem Tisch 2a gehalten und kann in einfacher Weise gegen einen im herzustellenden Hohlkörper 8 verbleibenden Einsatz ausgetauscht werden. Die Ausgangsstellung ist hierbei in Figur 1 und der Vorformvorgang in Figur 2 dargestellt. Figur 3 zeigt die fertigen Teile 7a und 7b in den jeweiligen Formwerkzeugen 1 und 5 der Formstationen 19 und 18.

Das Vorformwerkzeug 2 ist einem Teilschlitten 11a und das Formwerkzeug ist einem Teilschlitten 11b für den horizontalen Transport zugeordnet, die zu einem mittels eines Antriebes 14 verfahrbaren Schlitten 11 zusammengefasst sind.

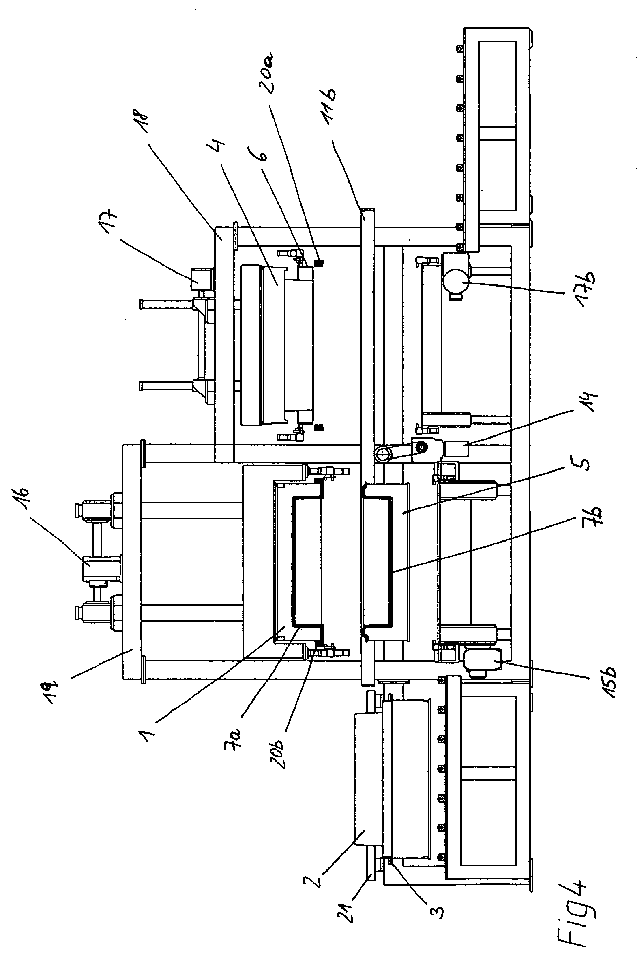

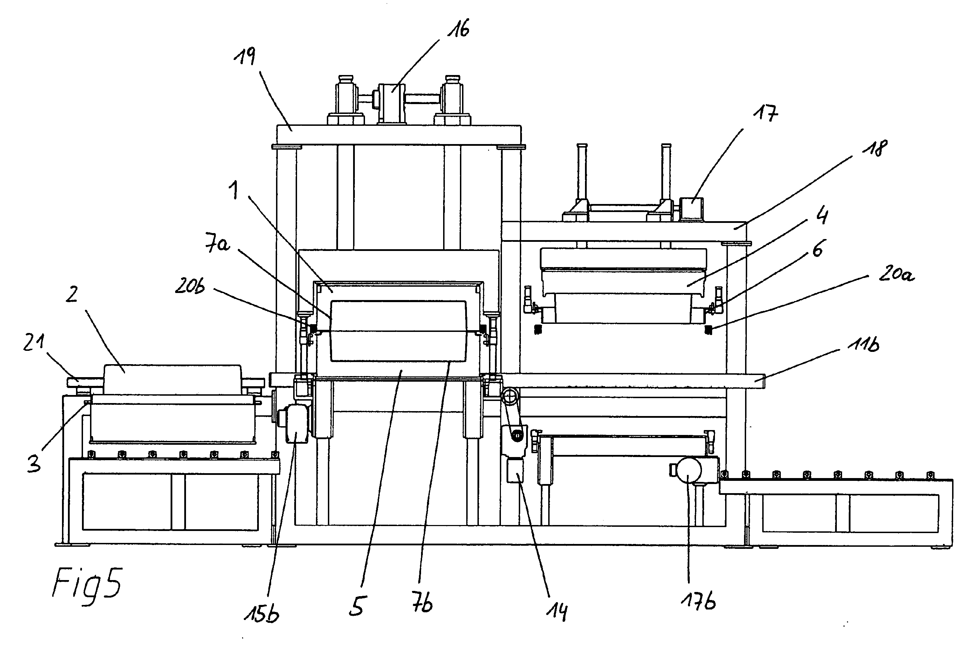

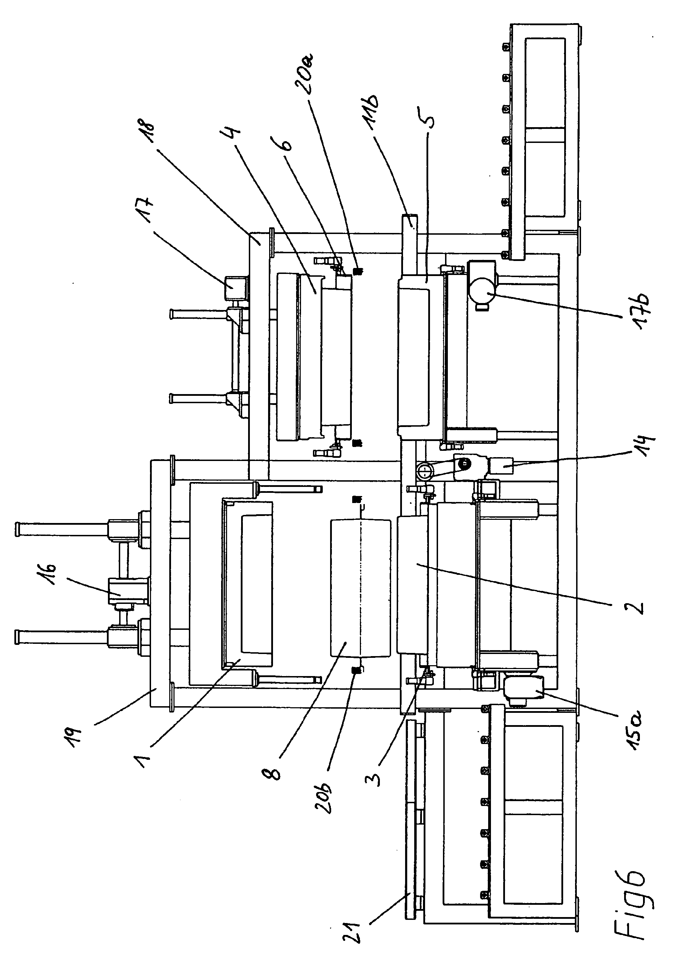

Wenn beide Formteile 7a und 7b durch Vorformung und Fertigformung fertiggestellt sind, wird auf einer Führung 21 der Schlitten 11a der Formstation 19 aus der in Figur 3 ersichtlichen Stellung in die in Figur 4 erkennbare Stellung neben die Formstation 19 verfahren. Somit ist Platz geschaffen für das untere Formwerkzeug 5 der Formstation 18, das mittels des Schlittens 11b auf einer, in gleicher Höhe wie die Führung 21, angeordneten Führung von der Formstation 18 in die Formstation 19 verfahrbar ist, wo es dem oberen Formwerkzeug 1 in ausgerichteter Form gegenüberliegt. Der in Figur 1 bis 3 mit 15a bezeichnete Hubantrieb für den Tisch 2a des Vorformwerkzeuges 2 ist nun in Fig.5 zur Hervorhebung einer weiteren Funktion mit 15b bezeichnet und dient in Verbindung mit dem Antrieb 16 dazu, die beiden Formwerkzeuge 1 und 5 gegeneinander zu fahren und die in diesen Formwerkzeugen enthaltenen Formteile 7a und 7b gegeneinander zu pressen und somit im Randbereich zu verbinden. Für den Fall, dass ein Einsatz zusätzlich zu einem Vorformwerkzeug oder anstelle des Vorformwerkzeuges 2 eingesetzt wird, kann dieser Einsatz bei diesem Pressvorgang an der Innenseite der Formteile 7a und 7b verschweißt oder in einer im Formteil geformten Nut geklemmt werden. Dieser Pressvorgang ist in Figur 5 dargestellt, während Figur 6 den fertigen Hohlkörper 8 auf dem in der Zwischenzeit wieder in die Formstation 19 eingefahrenen Vorformwerkzeug 2 liegend zeigt. Das obere Formwerkzeug 1 ist mittels des Antriebes 16 in eine obere Position angehoben.

Für das Formwerkzeug 5 bleiben während der Schiebebewegung alle Energieanschlüsse, Vakuum, Temperierung usw. erhalten. Dadurch liegt während der Schiebebewegung und des anschließenden Pressvorganges das Formteil 7b formschlüssig im Formwerkzeug 5 und wird für den Verbindungsvorgang auf Verbindungstemperatur gehalten.

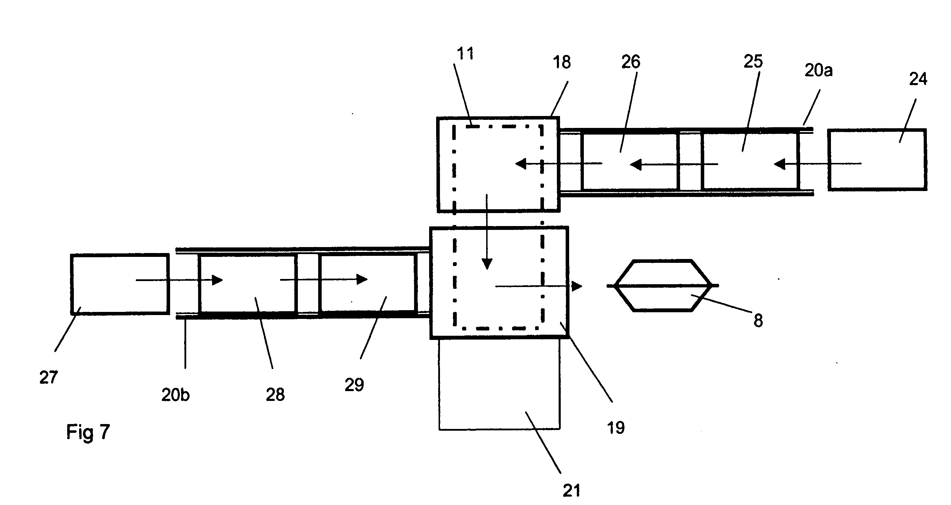

Figur 7 zeigt eine schematische Darstellung in Draufsicht die Formstationen 18 und 19, wobei hier in dieser Darstellung die Transporteinrichtungen 20a und 20b sowie die Kunststoffplatten 9 und 10 und die Heizeinrichtungen 26 und 29 schematisch angedeutet sind. Mit 24 und 27 sind jeweils Plattenzuführungssysteme bezeichnet, die die Kunststoffplatten 9 und 10 von jeweiligen Stapeln auf die Transporteinrichtungen 20a und 20b übergeben. Die eingezeichneten Pfeile zeigen die Transportrichtung der jeweiligen Kunststoffplatten. Hieraus ist erkennbar, dass die Transportrichtung für die jeweiligen Platten entgegengesetzt ausgerichtet ist, so dass die Heizstationen 26 und 29 mit geringem Abstand auf voneinander abgewandten Seiten bezogen auf die Formstationen 18 und 19 angeordnet sind. Eine Beeinträchtigung durch Wärmestrahlung oder Konvektion ist somit ausgeschlossen.

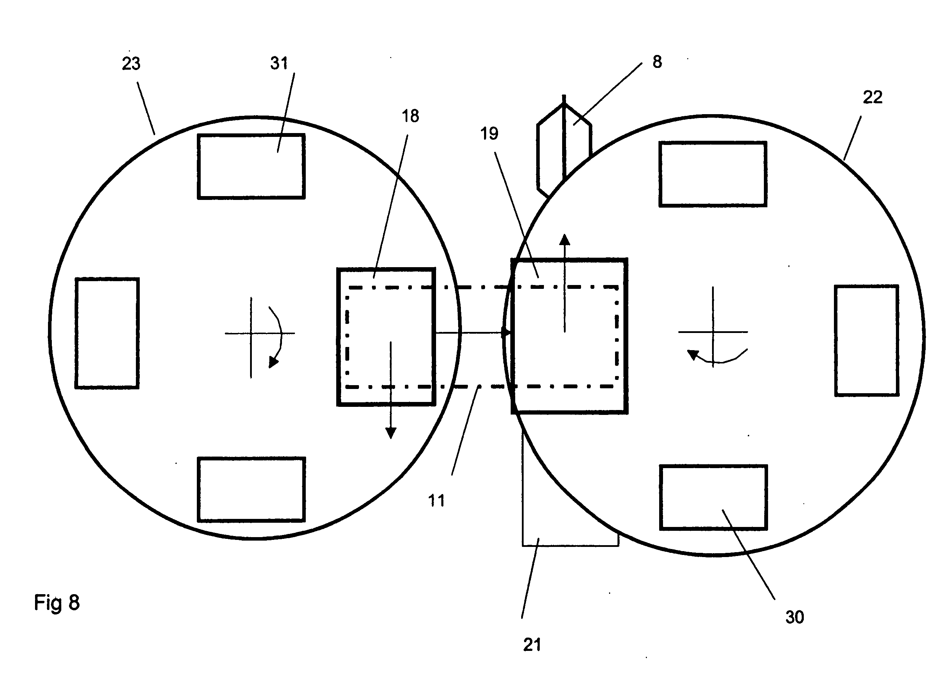

Figur 8 zeigt ebenfalls in schematischer Darstellung eine andere Art der Ausbildung der Vorrichtung zur Herstellung von Hohlkörpern. Hier sind zwei Transportsysteme in Form von Drehtischen 22 und 23 vorgesehen, wobei diese Drehtische jeweils gegensinnigen Drehsinn aufweisen. Diese Drehtische fördern die Kunststoffplatten 10 und 9 in die jeweiligen Formstationen 18 und 19, wobei vor dem Einbringen der Kunststoffplatten in die Formstationen diese die jeweiligen Heizstationen 30 bzw. 31 durchlaufen, wo sie auf die entsprechende Verformungstemperatur gebracht werden. Aufgrund der Verwendung von Drehtischen 22 und 23 liegen auch hier die Heizstationen 30 und 31 diametral einander gegenüber, bezogen auf die Formstationen 18 und 19, und weisen somit einen sehr großen räumlichen Abstand auf, um eine gegenseitige Beeinflussung zu vermeiden. Der Abstand zu den jeweiligen Formstationen ist ebenfalls so groß, dass eine Beeinträchtigung der Formstation durch die Heizstation vermieden ist.

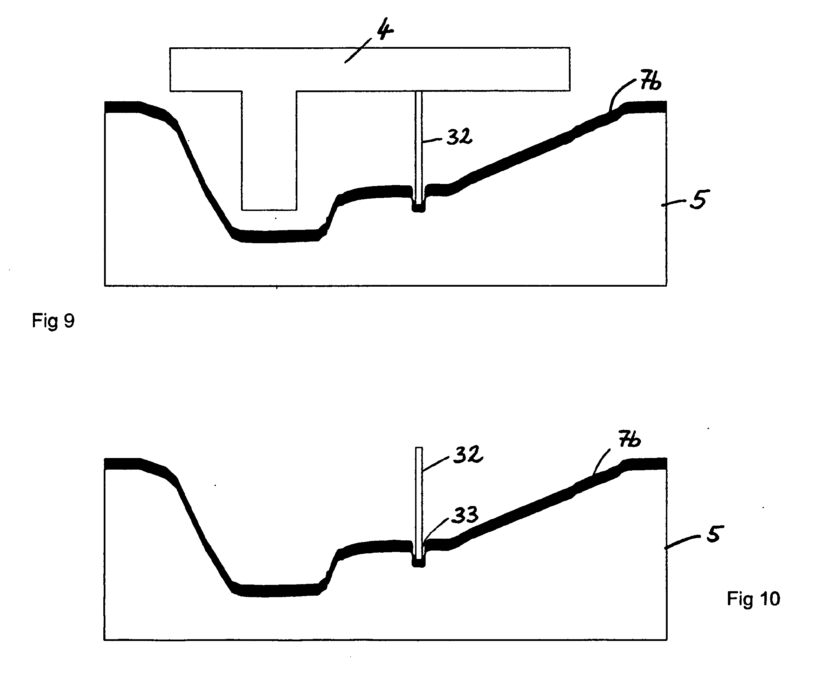

Die Figuren 9 und 10 zeigen in stark vergrößerter Form das untere Formwerkzeug 5 mit dem unteren Formteil 7b in der bereits fertigen Form, wobei Figur 9 auch noch das Vorformwerkzeug 4 zeigt, das einen Einsatz 32 in lösbarer Form trägt, der - wie aus der Gegenüberstellung von Figur 9 und von Figur 10 ersichtlich - in eine im Formteil 7b eingeformte Nut 33 zum Verbleib in diesem unteren Formteil 7b eingeklemmt ist. Figur 9 zeigt den Zustand kurz vor der Trennung des Einsatzes 32 vom Vorformwerkzeug 4 an dem dieser Einsatz lösbar gehalten ist. Figur 10 zeigt den Zustand mit festgeklemmten Einsatz 32, der beispielsweise eine Trennwand in einem herzustellenden Hohlkörper bildet.

## Patentansprüche

1. Verfahren zur Herstellung von Hohlkörpern mit einer einzelnen Vorrichtung, bei dem zwei Kunststoffplatten beheizt, vorgeformt, fertig, geformt und miteinander verbunden werden, wobei die Beheizung er Kunststoffplatten zeitlich unabhängig und räumlich abgeschirmt von der jeweils anderen Kunststoffplatte erfolgt und die Vorformung und die Verformung jeder Kunststoffplatte in getrennten Formstationen unabhängig und unbeeinflusst von der jeweils anderen Kunststoffplatte erfolgt.

2. Verfahren nach Anspruch 1, **dadurch gekennzeichnet, dass** die Zuführung der Kunststoffplatten zu getrennten Heizstationen im gegenläufigen Sinne erfolgt.

3. Verfahren nach Anspruch 1, **dadurch gekennzeichnet, dass** die Zuführung der Kunststoffplatten zu getrennten Heizstationen gleichsinnig, jedoch thermisch abgeschirmt erfolgt.

4. Verfahren nach einem der Ansprüche 1 bis 3, **dadurch gekennzeichnet, dass** für die Vorformung ein Vordehnstempel verwendet wird.

5. Verfahren nach einem der Ansprüche 1 bis 3, **dadurch gekennzeichnet, dass** für die Vorformung ein in dem Hohlkörper verbleibender Einsatz verwendet wird.

6. Verfahren nach einem der Ansprüche 1 bis 5, **dadurch gekennzeichnet, dass** für die Vorformung ein Vordehnstempel und ein in dem Hohlkörper verbleibender Einsatz verwendet wird.

7. Verfahren nach Anspruch 5, **dadurch gekennzeichnet, dass** der Einsatz mit zumindest einem der beiden Teile des Hohlkörpers verschweißt wird.

8. Verfahren nach Anspruch 5, **dadurch gekennzeichnet, dass** der Einsatz in zumindest einem der beiden Teile des Hohlkörpers geklemmt wird.

9. Verfahren nach Anspruch 5, **dadurch gekennzeichnet, dass** der Einsatz mit zumindest einem der beiden Teile des Hohlkörpers verklebt wird.

10. Verfahren nach Anspruch 5, **dadurch gekennzeichnet, dass** der Einsatz zusätzlich erhitzt wird.

11. Vorrichtung zur Durchführung des Verfahrens nach einem der Ansprüche 1 bis 10 mit zwei Formstationen und zwei Heizstationen sowie zwei Transporteinrichtungen, die jeweils eine Kunststoffplatte zu einer Heizstation und darauffolgend zu einer Formstation transportieren, wobei jede Formstation ein Vorformwerkzeug und ein Formwerkzeug aufweist und wobei das Formwerkzeug der einen Formstation für den Verbindungsvorgang in Ausrichtung zum verbleibenden Formwerkzeug der anderen Formstation im Austausch zu deren Vorformwerkzeug verfahrbar ist, wobei die Formstationen (18, 19) unabhängig voneinander betreibbar nebeneinander angeordnet sind und die Transporteinrichtungen (20a, 20b; 22, 23) aus gegensinnigen oder aus gleichen Transportrichtungen zu den Formstationen transportieren, und wobei eine Transporteinrichtung (11b) zum Verfahren der einen verformten Kunststoffplatte aus der einen Formstation (18) in die benachbarte Formstation (19) vorgesehen ist und die Beheizung der Kunststoffplatten Zeitlich unabhängig und räumlich abgeschirmt von der jeweils anderen Kunststoffplatte erfolgen kann.

12. Vorrichtung nach Anspruch 11, **dadurch gekennzeichnet, dass** die Transporteinrichtungen (20a, 20b) geradlinig verlaufende Transportsysteme umfassen.

13. Vorrichtung nach Anspruch 11, **dadurch gekennzeichnet, dass** die Transporteinrichtungen (22, 23) Transportsysteme nach Art von Drehtischen umfassen.

14. Vorrichtung nach Anspruch 13, **dadurch gekennzeichnet, dass** die Drehrichtungen beider Transporteinrichtungen (22, 23) gegensinnig sind.

15. Vorrichtung nach Anspruch 13, **dadurch gekennzeichnet, dass** die Drehrichtungen beider Transporteinrichtungen (22, 23) gleichsinnig sind.

16. Vorrichtung nach Anspruch 11 oder 12, **dadurch gekennzeichnet, dass** um die Heizstationen (26, 29; 30, 31) zumindest teilweise eine wärmeisolierende Abschirmung vorgesehen ist.

17. Vorrichtung nach einem der Ansprüche 11 bis 16, **dadurch gekennzeichnet, dass** das Vorformwerkzeug (2, 4) unabhängig vom zugeordneten Formwerkzeug (1, 5) quer zu der für das Vorformen vorgesehenen Verschieberichtung bzw. Hubrichtung verschiebbar oder verschwenkbar ist.

18. Vorrichtung nach einem der Ansprüche 11 bis 17, **dadurch gekennzeichnet, dass** das Vorformwerkzeug (2, 4) auswechselbar auf einem Tisch (2a, 5a) gehalten ist.

19. Vorrichtung nach einem der Ansprüche 11 bis 18, **dadurch gekennzeichnet, dass** eine erste Formstation (18) ein oberes Vorformwerkzeug (4) und ein unteres Formwerkzeug (5) und eine zweite Formstation (19) ein unteres Vorformwerkzeug (2) und ein oberes Formwerkzeug (1) aufweist, dass eine Schiebevorrichtung (11, 14) zum Verschieben des unteren Vorformwerkzeuges (2) der zweiten Formstation (19) aus dieser heraus und in diese hinein sowie eine Schiebevorrichtung (11, 14) zum Verschieben des unteren Formwerkzeuges (5) aus der ersten Formstation (18) in die zweite Formstation (19) und zurück vorgesehen sind und dass die Schiebevorrichtungen gemeinsam antreibbar sind.

20. Vorrichtung nach einem der Ansprüche 11 bis 18, **dadurch gekennzeichnet, dass** eine erste Formstation (18) ein oberes Vorformwerkzeug (4) und ein unteres Formwerkzeug (5) und eine zweite Formstation (19) ein unteres Vorformwerkzeug (2) und ein oberes Formwerkzeug (1) aufweist, dass eine Schiebevorrichtung (11, 14) zum Verschieben des unteren Vorformwerkzeuges (2) der zweiten Formstation (19) aus dieser heraus und in diese hinein sowie eine Schiebevorrichtung (11, 14) zum Verschieben des unteren Formwerkzeuges (5) aus der ersten Formstation (18) in die zweite Formstation (19) und zurück vorgesehen sind und dass die Schiebevorrichtungen getrennt antreibbar sind.

21. Vorrichtung nach einem der Ansprüche 11 bis 20, **dadurch gekennzeichnet, dass** der Hubantrieb (15a) für das Vorformwerkzeug (2) der zweiten Formstation (19) auch als Hubantrieb (15b) für das in die zweite Formstation (19) eingeschobene Formwerkzeug (5) der ersten Formstation (18) dient und zur Ausübung der für den Verbindungsvorgang der beiden Formteile zur Herstellung des Hohlkörpers (8) notwendigen Presskraft ausgelegt ist.

22. Vorrichtung nach Anspruch 21, **dadurch gekennzeichnet, dass** die zweite Formstation (19) zur Aufnahme der beim Verbindungsvorgang auftretenden Presskräfte massiver als die erste Formstation (18) ausgelegt ist.

## Claims

1. A method for the production of hollow bodies using a single device, wherein two plastic sheets are heated, preformed, finish-formed and bonded together, the heating of the plastic sheets taking place temporally independently and spatially shielded from the respective other plastic sheet and the preforming and the deformation of each plastic sheet taking place in separate forming stations independently of and uninfluenced by the respective other plastic sheet.

2. The method according to claim 1, **characterised in that** the feeding of the plastic sheets to separate heating stations takes place in opposite directions.

3. The method according to claim 1, **characterised in that** the feeding of the plastic sheets to separate heating stations takes place in the same direction, but thermally shielded.

4. The method according to any one of claims 1 to 3, **characterised in that** a pre-expansion stamp is used for the preforming.

5. The method according to any one of claims 1 to 3, **characterised in that** an insert remaining in the hollow body is used for the preforming.

6. The method according to any one of claims 1 to 5, **characterised in that** a pre-expansion stamp and an insert remaining in the hollow body are used for the preforming.

7. The method according to claim 5, **characterised in that** the insert is welded to at least one of the two parts of the hollow body.

8. The method according to claim 5, **characterised in that** the insert is clamped in at least one of the two parts of the hollow body.

9. The method according to claim 5, **characterised in that** the insert is glued to at least one of the two parts of the hollow body.

10. The method according to claim 5, **characterised in that** the insert is additionally heated.

11. A device for the implementation of the method according to any one of claims 1 to 10 with two forming stations and two heating stations as well as two transport devices, which in each case transport a plastic sheet to a heating station and then to a forming station, wherein each forming station has a preforming tool and a forming tool and wherein the forming tool of the one forming station can be traversed for the bonding operation in alignment with the remaining forming tool of the other forming station in exchange for its preforming tool, wherein the forming stations (18, 19) are arranged beside one another in such a way as to be capable of being operated independently of one another and the transport devices (20a, 20b; 22, 23) transport from opposite or from the same transport direction to the forming stations, and wherein a transport device (11b) is provided for traversing the one preformed plastic sheet out of the one forming station (18) into the neighbouring forming station (19) and the heating of the plastic sheets can take place temporally independently and spatially shielded from the respective other plastic sheet.

12. The device according to claim 11, **characterised in that** the transport devices (20a, 20b) comprise linearly running transport systems.

13. The device according to claim 11, **characterised in that** the transport devices (22, 23) comprise transport systems in the manner of rotary tables.

14. The device according to claim 13, **characterised in that** the directions of rotation of the two transport devices (22, 23) are in opposite directions.

15. The device according to claim 13, **characterised in that** the directions of rotation of the two transport devices (22, 23) are in the same direction.

16. The device according to claim 11 or 12, **characterised in that** a heat-insulating shielding is provided at least partially around the heating stations (26, 29; 30, 31).

17. The device according to any one of claims 11 to 16, **characterised in that** the preforming tool (2, 4) can be displaced or swivelled independently of the assigned forming tool (1, 5) at right angles to the shifting direction or lifting direction provided for the preforming.

18. The device according to any one of claims 11 to 17, **characterised in that** the preforming tool (2, 4) is held in a replaceable fashion on a table (2a, 5a).

19. The device according to any one of claims 11 to 18, **characterised in that** a first forming station (18) comprises an upper preforming tool (4) and a lower forming tool (5) and a second forming station (19) comprises a lower preforming tool (2) and an upper forming tool (1), that a pushing device (11, 14) is provided for shifting the lower preforming tool (2) of the second forming station (19) out of the latter and into the latter and a pushing device (11, 14) is provided for shifting the lower forming tool (5) out of the first forming station (18) into the second forming station (19) and back and that the pushing devices can be driven in common.

20. The device according to any one of claims 11 to 18, **characterised in that** a first forming station (18) comprises an upper preforming tool (4) and a lower forming tool (5) and a second forming station (19) comprises a lower preforming tool (2) and an upper forming tool (1), that a pushing device (11, 14) is provided for shifting the lower preforming tool (2) of the second forming station (19) out of the latter and into the latter and a pushing device (11, 14) is provided for shifting the lower forming tool (5) out of the first forming station (18) into the second forming station (19) and back and that the pushing devices can be driven separately.

21. The device according to any one of claims 11 to 20, **characterised in that** the lifting drive (15a) for the preforming tool (2) of the second forming station (19) is also used as a lifting drive (15b) for the forming tool (5) of the first forming station (18) pushed into the second forming station (19) and is designed to exert the pressing force required for the bonding process of the two shaped parts for the production of the hollow body (8).

22. The device according to claim 21, **characterised in that** the second forming station (19) is designed sturdier than the first forming station (18) in order to accommodate the pressing forces occurring during the bonding process.

## Revendications

1. Procédé pour la fabrication de corps-creux avec un seul dispositif, d'après lequel deux plaques synthétiques sont chauffées, préformées, formées et reliées entre elles, le chauffage de chacune des plaques synthétiques étant réalisé séparément dans le temps, en protégeant chaque plaque synthétique de l'autre, le préformage et le formage de chaque plaque synthétique se déroulant dans des stations de formage séparées, sans influence de l'autre plaque synthétique.

2. Procédé d'après la revendication 1, **caractérisé en ce que** les plaques synthétiques sont amenées vers les stations de chauffage en sens contraire l'une par rapport à l'autre.

3. Procédé selon la revendication 1, **caractérisé en ce que** les plaques synthétiques sont amenées vers les stations de chauffage dans le même sens.

4. Procédé selon les revendications 1 à 3, **caractérisé en ce que** le préformage se fait au moyen d'un piston de pré-déformation.

5. Procédé selon l'une des revendications 1 à 3, **caractérisé en ce que** le préformage se fait au moyen d'une garniture demeurant dans le corps-creux.

6. Procédé selon les revendications 1 à 5, **caractérisée en ce que** le préformage se fait au moyen d'un piston de pré-déformation ainsi que d'une garniture demeurant dans le corps-creux.

7. Procédé selon la revendication 5, **caractérisé en ce que** la garniture est soudée avec au moins l'un des deux éléments du corps-creux.

8. Procédé selon la revendication 5, **caractérisé en ce que** la garniture est coincée dans au moins l'un des deux éléments du corps-creux.

9. Procédé selon la revendication 5, **caractérisé en ce que** la garniture est collée au moins à l'un des deux éléments du corps-creux.

10. Procédé selon la revendication 5, **caractérisé en ce que** la garniture est également chauffée.

11. Dispositif pour l'exécution du procédé selon l'une des revendications 1 à 10, avec deux stations de formage et deux stations de chauffage, ainsi que deux dispositifs de transport, qui amènent chacun une plaque synthétique vers une station de chauffage, puis vers une station de formage, chaque station de formage étant pourvue d'un outil de préformage et d'un outil de formage et l'outil de formage d'une station pouvant être déplacé de manière à s'aligner sur l'outil de formage restant de l'autre station de formage pour le processus de liaison, en échange de l'outil de préformage de cette autre station, les stations de formage (18, 19) pouvant être utilisées séparément tout en étant placées côte à côte, et les installations de transport (20a, 20b; 22, 23) acheminant dans des directions de transport opposées ou égales vers les stations de formage, une installation de transport (11b) étant prévue pour acheminer l'une des plaques synthétiques à l'état formé de l'une des stations de formage (18) vers la station de formage avoisinante (19), et le chauffage des plaques synthétiques pouvant être effectué séparément dans le temps, chaque plaque synthétique étant à cet effet protégée de l'autre par un écran.

12. Procédé selon la revendication 11, **caractérisé en ce que** les installations de transport (20a, 20b) comportent des systèmes de transport qui se prolongent de façon rectiligne.

13. Procédé selon la revendication 11, **caractérisé en ce que** les installations de transport (22, 23) comportent des systèmes de transport semblables à des tables rotatives.

14. Procédé selon la revendication 13, **caractérisé en ce que** les rotations des deux installations de transport (22, 23) suivent des sens contraires.

15. Procédé selon la revendication 13, **caractérisé en ce que** les rotations des deux installations de transport (22, 23) suivent le même sens.

16. Procédé selon la revendication 11 ou 12, **caractérisé en ce que** les stations de chauffage (26, 29 ; 30, 31) sont pourvues d'un écran de protection au moins partiel pour isoler de la chaleur.

17. Procédé selon l'une des revendications 11 à 16, **caractérisé en ce que** l'outil de préformage (2, 4) peut être déplacé ou pivoté indépendamment de l'outil de formage correspondant (1, 5), de travers par rapport à la direction de déplacement ou à la direction de levage prévue pour le préformage.

18. Procédé selon l'une des revendications 11 à 17, **caractérisé en ce que** l'outil de préformage (2, 4) est maintenu sur une table (2a, 5a) de façon interchangeable.

19. Procédé selon l'une des revendications 11 à 18, **caractérisé en ce que** la première station de formage (18) est pourvue d'un outil de préformage supérieur (4) et d'un outil de formage inférieur (5) et **en ce que** la deuxième station de formage (19) est pourvue d'un outil de préformage inférieur (2) et d'un outil de formage supérieur (1), avec un dispositif de déplacement (11, 14) prévu pour pousser l'outil de préformage inférieur (2) hors de la deuxième station de formage (19) vers l'autre station de formage, et un dispositif de déplacement (11, 14) prévu pour pousser l'outil de formage inférieur (5) de la première station de formage (18) dans la deuxième station de formage (19) et retour, les dispositifs de déplacement pouvant être actionnés simultanément.

20. Procédé selon l'une des revendications 11 à 18, **caractérisé en ce que** la première station de formage (18) est pourvue d'un outil de préformage supérieur (4) ainsi que d'un outil de formage inférieur (5) et **en ce qu'**une deuxième station de formage (19) est pourvue d'un outil de préformage inférieur (2) ainsi que d'un outil de formage supérieur (1), avec un dispositif de déplacement (11, 14) prévu pour pousser l'outil de préformage inférieur (2) hors de la deuxième station de formage (19) vers l'autre station de formage, et un dispositif de déplacement (11, 14) prévu pour pousser l'outil de formage inférieur (5) hors de la première station de formage (18) dans la deuxième station de formage (19) et retour, les dispositifs de déplacement pouvant être actionnés séparément.

21. Procédé selon l'une des revendications 11 à 20, **caractérisé en ce que** la commande de levage (15a) pour l'outil de préformage (2) de la deuxième station de formage (19) sert également de commande de levage (15b) pour l'outil de formage (5) de la première station de formage (18) transféré dans la deuxième station de formage (19) et **en ce qu'**elle est conçue de manière à pouvoir produire la puissance de pression nécessaire au processus de liaison des deux éléments formés pour la fabrication du corps-creux (8).

22. Procédé selon la revendication 21, **caractérisé en ce que** la deuxième station de formage (19) est conçue de façon plus massive que la première (18), afin de pouvoir recevoir la puissance de pression produite durant le processus de liaison.
